# FASCICULE DE BREVET EUROPEEN

(11) **EP 2 285 745 B1**
(45) Date de publication et mention de la délivrance du brevet: **07.11.2012**
(21) Numéro de dépôt: 09769514.2
(22) Date de dépôt: 01.06.2009
(51) Int. Cl.: C02F 3/30, C02F 3/34

(54) **PROCEDE DE PURIFICATION BIOLOGIQUE D'UNE SOLUTION AQUEUSE CONTENANT DU PERCHLORATE D'AMMONIUM ET EVENTUELLEMENT DES NITRATES**
VERFAHREN ZUR BIOLOGISCHEN REINIGUNG EINER WASSERHALTIGEN LÖSUNG MIT AMMONIAKPERCHLORAT UND OPTIONALEN NITRATEN
METHOD FOR BIOLOGICAL PURIFICATION OF AN AQUEOUS SOLUTION CONTAINING AMMONIUM PERCHLORATE AND OPTIONALLY NITRATES

(30) Priorité: 03.06.2008 FR 0853644
(43) Date de publication de la demande: 23.02.2011
(73) Titulaire: HERAKLES, 33185 Le Haillan (FR)
(72) Inventeur: MARRAUD, Christine, F-17210 Chevanceaux (FR); HUYSSEUNE, Alex, F-33160 Saint-Médard-en-Jalles (FR); TAUDIN, Emilie, F-33160 Saint-Médard-en-Jalles (FR)
(74) Mandataire: Le Roux, Martine
(86) Numéro de dépôt international: PCT/FR2009/051029
(87) Numéro de publication internationale: WO 2009/156673

(56) Documents cités:
- FR-A- 2 788 055
- US-A- 5 302 285
- US-A1- 2003 155 296
- XU J ET AL: "Chlorate and nitrate reduction pathways are separately induced in the perchlorate-respiring bacterium Dechlorosoma sp. KJ and the chlorate-respiring bacterium Pseudomonas sp. PDA" WATER RESEARCH, ELSEVIER, AMSTERDAM, NL, vol. 38, no. 3, 1 février 2004 (2004-02-01), pages 673-680, XP004483433 ISSN: 0043-1354

## Description

L'invention concerne principalement un procédé de purification d'une solution aqueuse dans laquelle est dissout du perchlorate d'ammonium. Le procédé en cause est un procédé biologique. L'invention trouve en particulier application dans un contexte de traitement de solutions aqueuses industrielles résiduaires contaminées par du perchlorate d'ammonium lors de la production du perchlorate d'ammonium, de la fabrication ou de la destruction de produits contenant du perchlorate d'ammonium.

Le procédé convient plus particulièrement à la purification de solutions aqueuses contenant du perchlorate d'ammonium et des nitrates.

Le procédé de l'invention est tout particulièrement adapté au traitement des solutions aqueuses résiduaires produites lors de la fabrication ou de la destruction de matériaux énergétiques (propergols pour l'autopropulsion ou la sécurité automobile, explosifs civils et militaires...) contenant dans leur composition du perchlorate d'ammonium et des nitrates, par exemple du nitrate de sodium.

Au-delà de leur durée de vie spécifiée, les munitions et notamment les matériaux énergétiques qu'elles contiennent doivent être détruits. Cette destruction peut être effectuée par brûlage mais un tel brûlage dégage des fumées et n'est pas satisfaisant sur le plan environnemental. Un procédé plus intéressant consiste à broyer les matériaux énergétiques sous l'eau. Lesdits matériaux énergétiques, en particulier les propergols utilisés pour les accélérateurs de lanceurs spatiaux ou les missiles balistiques, sont souvent constitués par plus de 50% en masse de poudre de perchlorate d'ammonium. Les propergols destinés aux dispositifs "airbag" pour la sécurité automobile peuvent contenir du perchlorate d'ammonium et des nitrates (par exemple du nitrate d'ammonium, du nitrate de sodium, du nitrate de guanidine, du nitrate basique de cuivre...). Les solutions aqueuses de broyage contiennent par conséquent, à l'état dissout, une grande quantité de perchlorate d'ammonium et éventuellement des nitrates. Ces solutions aqueuses doivent être purifiées avant leur rejet. Une installation industrielle, pour être polyvalente, doit donc pouvoir traiter des solutions aqueuses résiduaires contenant du perchlorate d'ammonium sans nitrates (additionnels) et du perchlorate d'ammonium avec, en sus, des nitrates.

L'art antérieur décrit des familles de bactéries susceptibles, pour certaines, d'oxyder les ions ammoniums, pour d'autres, de réduire les ions nitrates et nitrites, et pour d'autres encore de réduire les ions perchlorates.

Il faut souligner que les bactéries capables de réduire les ions perchlorates sont aussi capables de réduire les ions nitrates/nitrites. En présence conjointe d'ions perchlorates et d'ions nitrates/nitrites, il existe donc, dans un réacteur en condition anaérobie, une compétition entre la consommation des ions perchlorates et celle des ions nitrates/nitrites par lesdites bactéries, ladite compétition étant par ailleurs toujours très favorable à la consommation des ions nitrates/nitrites. En effet, en présence conjointe d'ions perchlorates et d'ions nitrates/nitrites, la consommation desdits ions perchlorates ne débute de façon significative que lorsque lesdits ions nitrates/nitrites ont été consommés par les bactéries.

La demande de brevet FR 2 788 055 décrit des bactéries appartenant aux genres *Nitrosococcus, Nitrosospira, Nitrosomonas* et *Nitrobacter* pour la nitratation des ions ammoniums. Cette même demande de brevet et la demande FR 2 864 561 citent les genres de bactéries *Pseudomonas, Micrococcus, Denitrobacillus, Spirillum* et *Achromobacter* pour la réduction des ions nitrates et nitrites. Les brevets US 6,423,533 et US 5,302,285 décrivent des souches de bactéries (nommées DM-17 pour le premier brevet et HAP1 pour le second) capables de traiter par réduction les ions perchlorates et les ions nitrates. Les publications scientifiques "Microbial Degradation of Perchlorate : Principles and Applications", dans Environmental Engineering Science, Volume 20, Number 5, 2003, et *"*Dechloromonas agitata gen. nov., sp. nov and Dechlorosoma suillum gen. nov., sp. nov., two novel environmentally dominant (per)chlorate reducing bacteria and their phylogenetic position", dans International Journal of Systematic and Evolutionary Microbiology, 2001, 51, 527-533, font aussi état de genres et espèces de bactéries aptes à réduire les ions perchlorates.

Ces documents de l'art antérieur précisent que ces bactéries sont présentes dans l'environnement, notamment dans les boues activées de stations d'épuration et dans les boues sédimentaires.

Ces bactéries ont été utilisées pour mettre en oeuvre des procédés de traitement de solutions aqueuses contenant des ions perchlorates et ammoniums.

Le procédé décrit dans la demande de brevet FR 2 788 055 est un procédé en deux étapes qui consiste à traiter une solution aqueuse de perchlorate d'ammonium avec des bactéries dans deux réacteurs successifs : dans un premier réacteur, en condition aérobie, avec une boue activée contenant des bactéries nitrifiantes, en présence d'au moins une source de carbone minéral et d'éléments nutritionnels pour le métabolisme de ces bactéries, puis dans un second réacteur en condition anaérobie, avec une boue activée contenant des bactéries dénitrifiantes et des bactéries réductrices des ions perchlorates, en présence d'au moins une source de carbone organique et d'éléments nutritionnels pour le métabolisme de ces bactéries.

La première étape de nitrification mise en oeuvre dans un réacteur aérobie consiste donc à oxyder les ions ammoniums (NH₄⁺) en ions nitrates (NO₃⁻) et nitrites (NO₂⁻). Les paramètres influençant cette réaction sont le pH, la concentration en oxygène dissous et la concentration en carbone minéral. L'activité bactérienne entraîne une légère acidification. Pour conserver une activité maximale, le pH doit rester constant et neutre. A cette fin, de la soude est apportée dans le réacteur. De l'air peut aussi être injecté dans ledit réacteur pour favoriser l'apport en oxygène. La source de carbone est généralement constituée par le CO₂ contenu dans l'air au contact ou injecté dans le réacteur. Des éléments nutritionnels à base d'oligo-éléments sont nécessaires au développement des bactéries de la boue du réacteur. Les oligo-éléments apportés peuvent consister en un mélange de CaCl₂, MgSO₄, KHPO₄ et FeCl₃. Les quantités de sels minéraux injectées sont avantageusement : (KH₂PO₄/N=0,5); (MgSO₄/N=0,27) ; (CaCl₂/N=0,04). Le chlorure ferrique est aussi avantageusement apporté selon le rapport : FeCl₃/N=0,015. Les oligo-éléments sont généralement introduits de manière constante et régulière par un système de pompe automatisée.

La seconde étape mise en oeuvre en réacteur anaérobie consiste en une dénitrification par réduction des nitrates (NO₃⁻) et nitrites (NO₂⁻) en azote gazeux (N₂) et une réduction des perchlorates (ClO₄⁻) en chlorure (Cl⁻). Un apport en substrat carboné organique est réalisé en introduisant par exemple du méthanol ou de l'acide acétique dans le réacteur. Des éléments nutritionnels sont apportés à l'identique de l'étape précédente. Les paramètres contrôlés influençant cette réaction sont la température, le pH, la concentration en oxygène. On rappelle ici que les bactéries capables de réduire les ions perchlorates sont aussi capables de réduire les ions nitrates/nitrites. Il existe donc une compétition entre les réactions de dénitrification et de réduction des ions perchlorates dans le réacteur anaérobie, favorable à la première (dénitrification) et altérant donc le rendement de la seconde (réduction des ions perchlorates). Le rendement du procédé de traitement des perchlorates n'est donc, dans ce contexte, pas optimisé. Les durées de traitement sont longues, typiquement :
- de 3 jours pour la dégradation des ions nitrates/nitrites pendant lesquels la consommation des ions perchlorates est négligeable ; puis
- de 27 jours pour atteindre une réduction de plus de 80% des ions perchlorates présents ;
dans le cycle d'une installation industrielle.

La durée de traitement des ions perchlorates en présence d'ions nitrates/nitrites demeure acceptable lorsque ces derniers sont en quantité limitée, c'est-à-dire qu'ils ne proviennent que de l'oxydation des ions ammoniums contenus dans la solution à traiter, mais elle devient rédhibitoire lorsque ladite solution à traiter contient aussi des ions nitrates/nitrites (additionnels, présents en début de traitement en sus du perchlorate d'ammonium).

Un procédé de traitement de solutions aqueuses usées (en provenance de nettoyages de sol ou de recyclages de propergol solide), contenant des ions perchlorates, a également été décrit dans le brevet US 5,302,285. Il est mis en oeuvre dans un premier réacteur anaérobie contenant des bactéries spécialisées (nommées HAP1) capables de réduire les ions perchlorates puis dans un deuxième réacteur aérobie pour le traitement de la matière organique. La bactérie HAP1 est toutefois aussi susceptible de réduire les ions nitrates. Ainsi, le rendement de ce procédé pour le traitement des ions perchlorates est-il également altéré en cas de présence de nitrates dans la solution aqueuse à traiter.

L'homme de l'art est donc à la recherche d'un procédé de purification d'une solution aqueuse contenant du perchlorate d'ammonium, susceptible de contenir aussi des nitrates, procédé qui soit performant, simple, économique et qui permette d'éliminer à la fois les ions perchlorates, ammoniums et nitrates/nitrites avec un rendement élevé.

Le premier objet de l'invention est un procédé de purification biologique d'une solution aqueuse contenant du perchlorate d'ammonium, (c'est-à-dire des ions perchlorates (ClO₄⁻) et ammoniums (NH4⁺)), et éventuellement aussi des ions nitrates (NO₃⁻), caractérisé en ce qu'il comprend :
- une séquence de nitrification/dénitrification ; les étapes de nitrification et de dénitrification étant respectivement mises en oeuvre, en condition aérobie avec des bactéries nitrifiantes en présence d'un substrat carboné minéral (avantageusement CO₂) et d'éléments nutritionnels, en condition anaérobie avec des bactéries dénitrifiantes en présence d'un substrat carboné organique et d'éléments nutritionnels ; et,
- mise en oeuvre séparément de ladite séquence de nitrification/dénitrification, en condition anaérobie, avec des bactéries réductrices des ions perchlorates, en présence d'un substrat carboné organique et d'éléments nutritionnels, une étape de réduction des perchlorates ;
ladite étape de réduction des perchlorates étant mise en oeuvre séparément et en aval de ladite séquence de nitrification/dénitrification lorsque ladite solution aqueuse contient des ions nitrates.

De façon caractéristique, ladite étape de réduction des perchlorates est mise en oeuvre séparément de ladite séquence de nitrification/dénitrification. Elle est donc mise en oeuvre séparément de toute étape de dénitrification.

Lorsque ladite solution aqueuse (à purifier) renferme des ions perchlorates, des ions ammoniums (c'est-à-dire du perchlorate d'ammonium) et des ions nitrates (additionnels, provenant des matériaux dissous en amont du procédé de purification), ladite étape de réduction des perchlorates est donc mise en oeuvre en aval de ladite séquence de nitrification/dénitrification ; ceci pour éviter un détournement de l'activité spécifique des bactéries réductrices des ions perchlorates vers la réduction des ions nitrates.

Lorsque ladite solution aqueuse (à purifier) ne contient pas d'ions nitrates (provenant des matériaux dissous en amont du procédé de purification), ladite étape de réduction des perchlorates peut donc être mise en oeuvre en amont ou en aval de ladite séquence de nitrification/dénitrification. Avantageusement, elle est mise en oeuvre en amont de ladite séquence de nitrification/dénitrification. Dans un contexte de mise en oeuvre de ladite étape de réduction des perchlorates en aval de ladite séquence de nitrification/dénitrification, on ne peut en effet totalement exclure la présence d'ions nitrates/nitrites résiduels (à l'issue de la mise en oeuvre de ladite séquence).

La séquence de nitrification/dénitrification, mise en oeuvre dans au moins un réacteur (Ri), comporte au moins une étape de nitrification suivie d'au moins une étape de dénitrification. Il n'est pas exclu, qu'aux fins de parfaire l'élimination des ions ammonium, nitrates et nitrites, elle comporte plusieurs étapes de nitrification et/ou dénitrification. Ladite séquence de nitrification/dénitrification comporte généralement une étape de nitrification (avec ou sans recyclage) et une étape de dénitrification (avec ou sans recyclage), mises en oeuvre selon l'une ou l'autre des deux variantes ci-après :
- dans deux réacteurs montés en série, le premier (R1) en condition aérobie pour la nitrification, le deuxième (R2) en condition anaérobie pour la dénitrification, ou
- dans un seul réacteur (R3) à fonctions alternées de nitrification/dénitrification, en conditions aérobie puis anaérobie, pour, respectivement, la nitrification puis la dénitrification.

Ladite étape de réduction des ions perchlorates est mise en oeuvre, de façon séparée, en condition anaérobie, dans au moins un autre réacteur (R'i), généralement dans un unique autre réacteur (R'1) anaérobie, séparé, à fonction spécifique de réduction des ions perchlorates.

Le procédé de l'invention est ainsi généralement mis en oeuvre, soit au moyen de deux réacteurs montés en série (un réacteur alternant les étapes de nitrification et de dénitrification et un réacteur pour l'étape de réduction des ions perchlorates), soit au moyen de trois réacteurs montés en série (un réacteur de nitrification, un réacteur de dénitrification et un réacteur de réduction des perchlorates).

Un réacteur en condition anaérobie est, selon l'invention, un réacteur présentant, de préférence, une concentration en oxygène moléculaire dissous inférieure à 1 mg/l. Un réacteur en condition aérobie est, selon l'invention, de préférence équipé de moyens pour l'injection d'air en barbotage dans son contenu (sa concentration minimale en oxygène est de préférence supérieure à 2 mg/l).

Les bactéries nitrifiantes, utilisées en réacteur aérobie dans la séquence de nitrification/dénitrification (plus précisément lors d'une étape de nitrification), sont capables d'assurer la nitrification des ions ammoniums en ions nitrites et nitrates. Ces bactéries appartiennent par exemple aux genres *Nitrosococcus, Nitrosospira, Nitrosomonas* et *Nitrobacter.* On les trouve usuellement dans les boues activées des stations d'épuration d'eaux résiduaires urbaines et les boues sédimentaires.

Les bactéries dénitrifiantes, utilisées en réacteur anaérobie dans la séquence de nitrification/dénitrification (plus précisément lors d'une étape de dénitrification), sont capables d'assurer la dénitrification des ions nitrates et nitrites en azote moléculaire. Ces bactéries sont également des bactéries courantes, telles que celles que l'on rencontre dans les boues activées des stations d'épuration d'eaux résiduaires urbaines et les boues sédimentaires, par exemple les bactéries appartenant aux genres *Pseudomonas, Micrococcus, Denitrobacillus, Spirillum* et *Achromobacter.*

Pour l'étape de réduction des ions perchlorates, mise en oeuvre en condition anaérobie (généralement au sein d'un unique réacteur, avec ou sans recyclage), les bactéries utilisées peuvent notamment être des bactéries de l'art antérieur, connues comme bactéries réductrices des ions perchlorates, telles par exemple celles listées dans le tableau 1 de "Microbial Degradation of Perchlorate : Principles and Applications", Environmental Engineering Science, Volume 20, Number 5, 2003. Les bactéries convenant à la mise en oeuvre de ladite étape de réduction des perchlorates peuvent aussi appartenir aux espèces *Exiguobacterium mexicanum, Baci*//*us cereus, Staphylococcus warneri* et/ou *Staphylococcus pasteuri,* déjà connues de l'art antérieur mais dont la capacité à réduire les ions perchlorates a été nouvellement identifiée par la Demanderesse. Avantageusement, les espèces de bactéries *Exiguobacterium mexicanum* et/ou *Baci*//*us cereus* sont utilisées pour ladite étape de réduction des perchlorates, très avantageusement l'espèce *Exiguobacterium mexicanum.*

Selon une première variante, le procédé de l'invention peut être mis en oeuvre en ensemençant les réacteurs (on a vu ci-dessus qu'au moins deux réacteurs sont utiles à la mise en oeuvre dudit procédé) avec des bactéries, adaptées à chacun desdits réacteurs, obtenues à partir de souches de cultures. Les bactéries nitrifiantes, les bactéries dénitrifiantes et les bactéries réductrices des perchlorates proviennent alors de souches de cultures.

Selon une deuxième variante, le procédé de l'invention peut être mis en oeuvre en ensemençant les réacteurs avec des bactéries nitrifiantes, des bactéries dénitrifiantes et des bactéries réductrices des perchlorates, présentes dans une boue activée, boue activée connue par l'homme métier comme contenant de telles bactéries (adaptées à la mise en oeuvre du procédé de l'invention). Une telle boue activée provient généralement d'une station d'épuration (d'eaux résiduaires urbaines) ou de boues sédimentaires. Une quantité adéquate d'une telle boue est disposée dans chacun des réacteurs.

Dans le cadre de cette deuxième variante, la boue activée du réacteur à fonction de réduction des ions perchlorates (la boue renfermant les bactéries réductrices des perchlorates) peut plus particulièrement consister en une boue prélevée dans un réacteur à fonction de dénitrification préexistant ou dans un réacteur à fonctions conjointes de dénitrification et réduction des ions perchlorates préexistant, notamment pour la mise en oeuvre du procédé décrit dans la demande de brevet FR 2 788 055.

Une phase de spécialisation à la réduction des ions perchlorates des bactéries renfermées dans la boue activée disposée dans le réacteur à fonction de réduction des ions perchlorates est généralement nécessaire, notamment pour atteindre les rendements visés lors de l'utilisation dudit réacteur dans un cycle industriel. Cette phase de spécialisation est obtenue par ajouts successifs d'ions perchlorates, avantageusement en quantités croissantes, à la boue activée contenue dans ledit réacteur à fonction de réduction des ions perchlorates (boue activée généralement choisie parmi les boues d'épuration d'eaux résiduaires urbaines, les boues sédimentaires et les boues prélevées dans des réacteurs de dénitrification ou de dénitrification et réduction des perchlorates ; boue activée au sein de laquelle un minimum de bactéries adéquates est présent et apte à se multiplier) en présence d'un substrat carboné organique et d'éléments nutritionnels. Cette spécialisation de la boue activée à la réduction des ions perchlorates dure généralement de 1 mois à 6 mois. Il n'est pas exclu qu'une telle phase de spécialisation soit mise en oeuvre "indépendamment" du procédé de l'invention, en amont, dans un réacteur non directement impliqué dans la mise en oeuvre dudit procédé de l'invention.

Les bactéries contenues dans la boue disposée dans chaque réacteur sont acclimatées (consécutivement à la phase de spécialisation dans le cas de la boue disposée dans le réacteur à fonction de réduction des ions perchlorates).

L'acclimatation des bactéries contenues dans la boue activée est obtenue en conditionnant les réacteurs (condition aérobie pour la nitrification, conditions anaérobies pour la dénitrification et la réduction des ions perchlorates) et en apportant les éléments nutritionnels et la source de carbone adaptée qui servent au développement et à la multiplication desdites bactéries (en présence de la solution aqueuse à traiter).

Quelle que soit la variante exacte de mise en oeuvre du procédé de l'invention avec boues, c'est après l'acclimatation des bactéries de la boue introduite dans chaque réacteur que le cycle industriel dudit procédé (de purification biologique d'une solution aqueuse contenant du perchlorate d'ammonium (c'est-à-dire des ions perchlorates (ClO₄⁻) et ammonium (NH₄⁺), et pouvant aussi contenir des ions nitrates (NO₃⁻)) peut être amorcé avec un rendement satisfaisant.

On a parlé d'une première variante du procédé de l'invention mise en oeuvre, dans chaque réacteur, avec ensemencement et d'une seconde variante mise en oeuvre, dans chaque réacteur, avec une boue (boue déjà ou non utilisée dans un contexte proche). Font partie intégrante du cadre de l'invention d'autres variantes : par exemple, une variante selon laquelle différentes boues sont utilisées ou une variante mixte selon laquelle au moins un réacteur est ensemencé tandis qu'au moins un autre réacteur renferme une boue activée...

Un autre aspect de l'invention est relatif au type de substrat, source de carbone organique, à apporter aux bactéries du réacteur à fonction de réduction des perchlorates, plus particulièrement en vue d'optimiser le coût de traitement et l'efficacité de la dégradation desdits perchlorates. Les substrats cités dans l'état de l'art sont notamment choisis dans le groupe constitué par le méthanol, l'éthanol, le propanol, l'isopropanol, le butanol, et l'acide acétique. La demanderesse a montré que d'autres substrats sont aussi intéressants, en référence au rendement de réduction des perchlorates et au coût de traitement. Il s'agit des savons, tels le carboxylate de potassium et de sodium, des acides gras de type végétal et de leurs mélanges. Ainsi, le procédé de l'invention est avantageusement mis en oeuvre avec un substrat organique pour la réduction des perchlorates choisi parmi l'acide acétique, les savons, tels le carboxylate de potassium et de sodium, les acides gras végétaux et leurs mélanges.

Avantageusement, les effluents liquides, à l'issue d'au moins l'une quelconque des étapes du procédé (étapes : de nitrification, de dénitrification et de réduction des perchlorates) sont filtrés pour l'obtention d'une part d'un effluent épuré de matières en suspension et d'autre part d'un rétentat riche en bactéries, au moins en partie recyclé (dans son réacteur d'origine).

Le procédé de l'invention permet de traiter des solutions aqueuses contenant de grandes quantités de perchlorate d'ammonium, y compris des solutions saturées avec un excès de perchlorate d'ammonium non dissout, éventuellement en présence de nitrates. Les solutions aqueuses concernées peuvent notamment contenir jusqu'à 100 g/l de perchlorate d'ammonium avec éventuellement jusqu'à 100 g/l de nitrates.

La présente invention concerne également :
- un procédé d'obtention d'une boue activée spécialisée à la réduction des perchlorates (un procédé de spécialisation d'une boue activée), qui comprend :
   + l'introduction, dans un réacteur, vide, en condition anaérobie, d'une part, d'une boue activée, choisie parmi une boue d'épuration d'eaux résiduaires urbaines, une boue sédimentaire, et une boue activée prélevée dans un réacteur à fonction de dénitrification ou dans un réacteur à fonctions conjointes de dénitrification et réduction des ions perchlorates, et d'autre part, d'un substrat carboné organique et d'éléments nutritionnels ;
   + des ajouts successifs d'ions perchlorates, avantageusement en quantités croissantes, dans ledit réacteur.
- l'utilisation d'une boue (spécialisée) obtenue par ledit procédé et/ou de bactéries des espèces *Exiquobacterium mexicanum, Bacillus cereus, Staphylococcus warneri* et/ou *Staphylococcus pasteuri,* pour la réduction de perchlorates. On rappelle incidemment ici que ces bactéries ne sont pas *per se* nouvelles mais que l'on en préconise ici une utilisation nouvelle (pour la réduction des perchlorates)

L'invention est maintenant illustrée, de façon nullement limitative, par les figures annexées et les exemples détaillés qui suivent.
La figure 1 illustre un procédé de spécialisation d'une boue activée à la réduction des ions perchlorates par ajouts successifs d'ions perchlorates.
La figure 2 montre l'augmentation de la vitesse spécifique de réduction desdits ions perchlorates au cours du procédé de spécialisation de la figure 1.
La figure 3 montre, au cours du temps, l'évolution en MES (MES = Matière organique En Suspension), en rapport avec les ajouts d'ions perchlorates lors du procédé de spécialisation (0 à 40 jours, partie A de la courbe) puis lors de la phase d'acclimatation (40 à plus de 400 jours, partie B de la courbe), de ladite boue activée pour le traitement des perchlorates.

### Détail d'un procédé de spécialisation à la réduction des ions perchlorates d'une boue activée

Un prélèvement de boue est réalisé dans un réacteur, à fonction de dénitrification et réduction des ions perchlorates, en condition anaérobie, alimenté en méthanol comme source de substrat carboné. Dans ledit réacteur, le procédé décrit dans la demande de brevet FR 2 788 055 est mis en oeuvre depuis 10 ans, au sein d'une installation industrielle de traitement de solutions aqueuses résiduaires contenant du perchlorate d'ammonium. La boue d'origine provient de la station d'épuration de Bordeaux Nord Louis Fargue, France.

La boue prélevée est disposée dans un (autre) réacteur vide ayant vocation à avoir une fonction de réduction des perchlorates. Elle y est soumise au procédé de spécialisation à la réduction des ions perchlorates décrit ci-après. Pendant ledit procédé de spécialisation, le réacteur à fonction (future) de réduction des ions perchlorates est maintenu en condition anaérobie (O₂ < 1mg/l), à des températures comprises entre 15 et 35°C et agité. Un substrat carboné (acide acétique) et des éléments nutritionnels sont apportés aux bactéries de ladite boue contenue dans ledit réacteur.

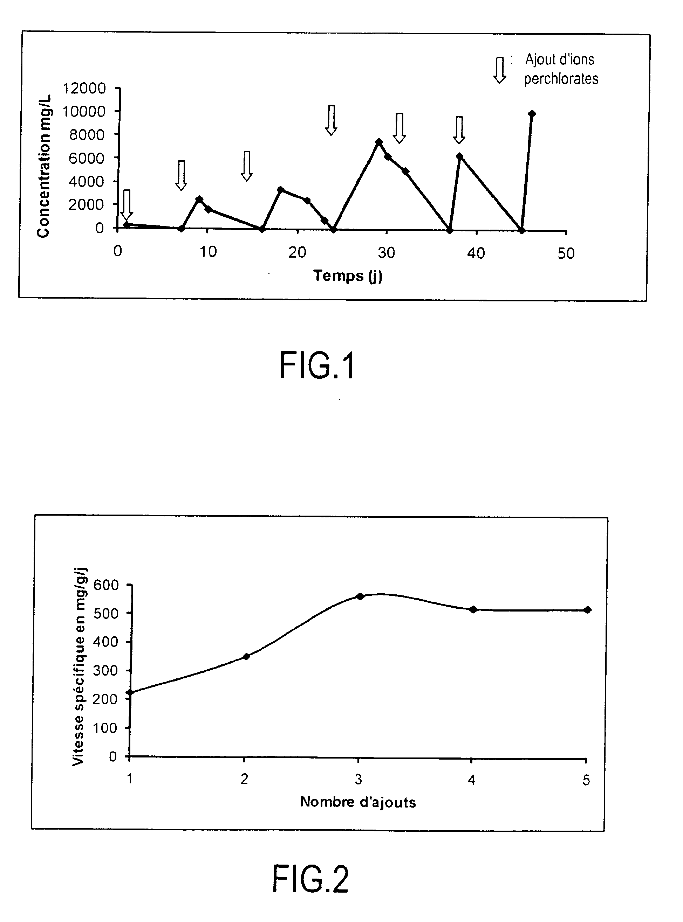

En référence à la figure 1, la boue disposée dans ledit réacteur à fonction (future) de réduction des perchlorates est ensuite spécialisée, pour la réduction des ions perchlorates, par ajouts successifs en ions perchlorates, de 0,5 g/l à 8 g/l environ (ladite concentration indiquée des ions perchlorates est celle desdits ions dans la solution apportée au réacteur), sur une durée de 40 jours. Un nouvel ajout est introduit dans le réacteur lorsque les ions perchlorates de l'ajout précédent ont tous été réduits. Après un ajout d'ions perchlorates, la concentration en ions perchlorates dans le réacteur décroît pour revenir à zéro.

La vitesse de consommation des ions perchlorates augmente dès les premiers ajouts d'ions perchlorates, ce qui signe l'effet de la spécialisation de la boue au traitement des ions perchlorates. Ceci se traduit, en référence à la figure 2, par l'augmentation de la vitesse spécifique (mg d'ions perchlorates consommé par g de MES et par jour) de réduction des ions perchlorates par la boue soumise au procédé de spécialisation. Ladite vitesse passe, pour les conditions décrites, d'une valeur de vitesse spécifique moyenne initiale faible proche de 200 mg ClO₄⁻/g MES/j à une valeur stable autour de la vitesse moyenne spécifique de 500 mg ClO₄⁻/g MES/j en fin de procédé de spécialisation.

Dans le tableau 1 ci-après, La demanderesse montre que des substrats carbonés organiques - tels que les savons (par exemple le carboxylate de potassium et/ou de sodium) et les acides gras végétaux - autres que ceux cités dans l'art antérieur - acide acétique et méthanol, notamment - conduisent à des vitesses de dégradation élevées, dans la gamme de celles obtenues avec lesdits acide acétique et méthanol.

**Tableau 1**

| | Vitesse maximale de dégradation g ClO₄⁻/g MES/j |
|---|---|
| Acide acétique | 0,565 |
| Acide gras végétal | 0,360 |
| Carboxylate de potassium | 0,250 |
| Méthanol | 0,221 |

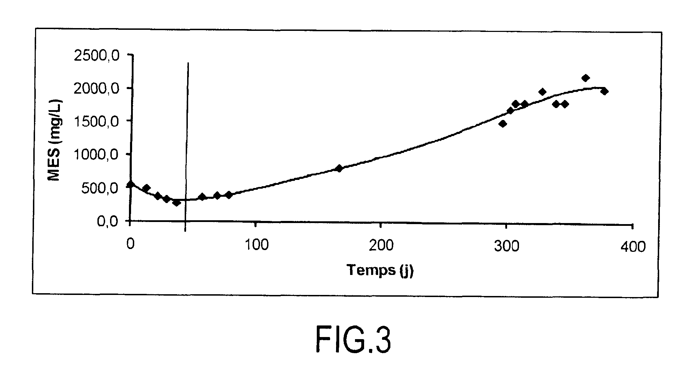

Sur la figure 3, le profil de variation de la concentration en MES a été suivi tout au long du procédé de spécialisation et d'acclimatation. Pendant les 40 premiers jours, la concentration en MES diminue de manière significative. Les bactéries de la boue incapables de dégrader les ions perchlorates "disparaissent". Après environ 40 jours, une augmentation de cette concentration en MES est constatée. Cette augmentation montre la croissance significative de bactéries spécifiques réductrices des perchlorates au cours du procédé d'acclimatation. Une vitesse de croissance desdites bactéries spécifiques a ainsi pu être déterminée.

Au terme du procédé de spécialisation, la boue contient des bactéries spécialisées à la réduction des perchlorates parmi lesquelles celles des espèces suivantes : *Exiguobacterium mexicanum, Baci*//*us cereus, Staphylococcus warneri et*/*ou Staphylococcus pasteuri.* Ladite boue a été analysée et lesdites espèces identifiées par l'Institut Pasteur. Ces espèces représentent plus de 90 % de la population bactérienne de la boue ainsi spécialisée. Elles ont été citées par ordre d'importance en nombre. Ces espèces n'ont pas été décrites dans l'art antérieur comme étant capables de réduire les ions perchlorates.

### Exemple de traitement industriel (selon l'invention) d'une solution aqueuse contenant du perchlorate d'ammonium et des nitrates

Cet exemple concerne le traitement d'une solution aqueuse contenant à la fois du perchlorate d'ammonium et des nitrates. Le procédé est mis en oeuvre selon les étapes successives de réaction 1 (nitrification de l'ammonium), de réaction 2 (dénitrification), de réaction 3 (réduction des perchlorates)

L'installation est composée principalement de trois réacteurs montés en série, ayant respectivement pour volume, 150 m³ pour le réacteur 1 à fonction de nitrification, 130 m³ pour le réacteur 2 à fonction de dénitrification et 50 m³ pour le réacteur 3 à fonction de réduction des ions perchlorates. Lesdits réacteurs comportent des moyens d'agitation, de contrôle du pH, d'injection d'air (activés ou non), des moyens pour l'alimentation en, et la sortie de, l'effluent, ainsi que des moyens pour l'introduction des composés additionnels.

Le réacteur 1 est en condition aérobie, ouvert, et comporte un système d'injection d'air opérationnel. Il contient une boue activée acclimatée nitrifiante. Il est alimenté, en air à un débit de 7 kg O₂/h, en oligo-éléments (c'est-à-dire, en phosphate de potassium (50 kg/j), en sulfate de magnésium (48 kg/j), en chlorure de calcium (6 kg/j), en chlorure ferrique (39 kg /j)) et en soude pour la régulation du pH.

Les réacteurs 2 et 3 sont des réacteurs en condition anaérobie, fermés.

Le réacteur 2 contient une boue activée acclimatée dénitrifiante et est alimenté en acide acétique (82 kg/j). Il est alimenté en éléments nutritionnels (oligo-éléments et chlorure ferrique) *via* les effluents provenant du réacteur 1.

Le réacteur 3 contient une boue réductrice des ions perchlorates, c'est-à-dire une boue ayant été spécialisée et acclimatée. Il est alimenté en acide acétique (460 kg/j), en oligo éléments, c'est-à-dire, en phosphate de potassium (50 kg/j), en sulfate de magnésium (48 kg/j) et en chlorure de calcium (6 kg/j).

On introduit alors, en continu, dans le réacteur 1, une solution aqueuse contenant 10 g/l de perchlorate d'ammonium et 4 g/l de nitrates avec un débit de 1,14 m³/h. La solution aqueuse est mélangée à la boue activée, par agitation. La température est maintenue supérieure à 15°C.

L'effluent liquide sortant du réacteur 1 (temps de séjour : 5,5 jours) ne contient pratiquement plus d'ions ammoniums (<1%). Il est injecté dans le réacteur 2 par surverse au débit d'alimentation.

L'effluent liquide sortant du réacteur 2, ne contenant plus d'ammonium (<1%) et pratiquement plus de nitrates et de nitrites (<1%), est injecté dans le réacteur 3 par surverse au débit d'alimentation. La durée de traitement dans le réacteur 2 est de 4,75 jours.

Dans le réacteur 3, l'effluent liquide sortant du réacteur 2 est mélangé à la boue activée spécialisée et acclimatée pour la réduction des ions perchlorates, par agitation. La température est maintenue supérieure à 15°C. L'effluent sortant dudit réacteur 3 est ensuite filtré à un débit de 95 m³/h à l'aide d'un système membranaire à pores submicroniques. La concentration en MES de l'effluent sortant filtré est inférieure à 30 mg/l. Le rétentat récupéré est recyclé dans ledit réacteur 3. La durée du traitement est typiquement de 2 jours pour une réduction à 99,9 % des ions perchlorates.

Ledit effluent sortant filtré est épuré des ammoniums, des nitrates, des nitrites, des perchlorates et des matières en suspension. En suivant ce procédé (variante de mise en oeuvre du procédé de l'invention), les concentrations en ammonium, nitrate/nitrite, perchlorate sont inférieures à 1% en masse dans les rejets. Ledit effluent est rejetable en milieu naturel.

Selon le procédé de l'invention, il faut donc une durée de traitement de 2 jours seulement pour éliminer 99,9% des ions perchlorates. Selon le procédé de l'art antérieur de la demande FR 2 788 055, développé à l'échelle industrielle, il faut une durée de 27 jours pour éliminer plus de 80% des ions perchlorates.

## Revendications

1. Procédé de purification biologique d'une solution aqueuse contenant du perchlorate d'ammonium, et éventuellement aussi des ions nitrates, **caractérisé en ce qu'**il comprend :
- une séquence de nitrification/dénitrification ; les étapes de nitrification et de dénitrification étant respectivement mises en oeuvre, en condition aérobie avec des bactéries nitrifiantes en présence d'un substrat carboné minéral et d'éléments nutritionnels, en condition anaérobie avec des bactéries dénitrifiantes en présence d'un substrat carboné organique et d'éléments nutritionnels ; et,
- mise en oeuvre, séparément de ladite au moins une séquence de nitrification/dénitrification, en condition anaérobie, avec des bactéries réductrices des ions perchlorates en présence d'un substrat carboné organique et d'éléments nutritionnels, une étape de réduction des perchlorates ;
ladite étape de réduction des perchlorates étant mise en oeuvre séparément et en aval de ladite séquence de nitrification/dénitrification lorsque ladite solution aqueuse contient des ions nitrates.

2. Procédé selon la revendication 1, **caractérisé en ce que** lesdites bactéries réductrices des ions perchlorates appartiennent aux espèces *Exiguobacterium mexicanum* et/ou *Bacillus cereus* et/ou *Staphylococcus warneri* et/ou *Staphy*/*ococcus pasteuri.*

3. Procédé selon la revendication 1 ou 2, **caractérisé en ce que** lesdites bactéries nitrifiantes, lesdites bactéries dénitrifiantes et lesdites bactéries réductrices des perchlorates proviennent de souches de cultures.

4. Procédé selon la revendication 1 ou 2, **caractérisé en ce que** lesdites bactéries nitrifiantes, lesdites bactéries dénitrifiantes et lesdites bactéries réductrices des perchlorates sont présentes dans une boue activée.

5. Procédé selon la revendication 4, **caractérisée en ce que** ladite boue activée provient de l'épuration d'eaux résiduaires urbaines ou d'une boue sédimentaire.

6. Procédé selon l'une quelconque des revendications 1, 2, 4 ou 5, **caractérisé en ce que** lesdites bactéries réductrices des perchlorates sont présentes dans une boue activée prélevée dans un réacteur à fonction de dénitrification ou dans un réacteur à fonctions conjointes de dénitrification et réduction des ions perchlorates.

7. Procédé selon l'une quelconque des revendications 1, 2, 4 à 6, **caractérisé en ce que** lesdites bactéries réductrices des perchlorates sont présentes dans une boue activée spécialisée à la réduction des perchlorates.

8. Procédé selon la revendication 7, **caractérisé en ce que** ladite boue activée spécialisée à la réduction des perchlorates a été obtenue par un procédé qui comprend :
- l'introduction, dans un réacteur, vide, en condition anaérobie, d'une part, d'une boue activée, choisie parmi une boue d'épuration d'eaux résiduaires urbaines, une boue sédimentaire, et une boue activée prélevée dans un réacteur à fonction de dénitrification ou dans un réacteur à fonctions conjointes de dénitrification et réduction des ions perchlorates, et d'autre part, d'un substrat carboné organique et d'éléments nutritionnels ;
- des ajouts successifs d'ions perchlorates, avantageusement en quantités croissantes, dans ledit réacteur.

9. Procédé selon l'une quelconque des revendications 1 à 8, **caractérisé en ce que** la réduction des perchlorates est mise en oeuvre en présence d'un substrat carboné organique choisi parmi l'acide acétique, les savons, tels le carboxylate de potassium et de sodium, les acides gras végétaux et leurs mélanges.

10. Procédé selon l'une quelconque des revendications 1 à 9, **caractérisé en ce que** les effluents liquides, à l'issue d'au moins l'une desdites étapes, sont filtrés pour l'obtention d'une part d'un effluent épuré de matières en suspension et d'autre part d'un rétentat riche en bactéries, au moins en partie recyclé.

11. Procédé selon l'une quelconque des revendications 1 à 10, **caractérisé en ce que** ladite solution aqueuse renferme jusqu'à 100 g/l de perchlorate d'ammonium.

12. Procédé selon l'une quelconque des revendications 1 à 11, **caractérisé en ce que** ladite solution aqueuse renferme des nitrates à moins de 100 g/l.

13. Procédé selon l'une quelconque des revendications 1 à 12, **caractérisé en ce qu'**il est mis en oeuvre dans trois réacteurs, un réacteur de nitrification, un réacteur de dénitrification et un réacteur de réduction des perchlorates, montés en série.

## Claims

1. A method for biological purification of an aqueous solution containing ammonium perchlorate, and optionally also nitrate ions, **characterized in that** it comprises:
- a nitrification/denitrification sequence; the steps of nitrification and of denitrification being carried out respectively under aerobic conditions with nitrifying bacteria in the presence of a carbon-containing mineral substrate and nutrients, and under anaerobic conditions with denitrifying bacteria in the presence of a carbon-containing organic substrate and nutrients; and,
- a step for reducing the perchlorates carrying out, separately from said at least one nitrification/denitrification sequence, under anaerobic conditions, with perchlorate ion reducing bacteria in the presence of a carbon-containing organic substrate and nutrients, a step for reducing the perchlorates;
said step for reducing the perchlorates being carried out separately and downstream of said nitrification/denitrification sequence when said aqueous solution contains nitrate ions.

2. The method as claimed in claim 1, **characterized in that** said perchlorate ion reducing bacteria belong to the species *Exiguobacterium mexicanum* and/or *Bacillus cereus* and/or *Stachylococcus warneri* and/or *Staphylococcus pasteuri.*

3. The method as claimed in claim 1 or 2, **characterized in that** said nitrifying bacteria, said denitrifying bacteria and said perchlorate reducing bacteria are derived from cultured strains.

4. The method as claimed in claim 1 or 2, **characterized in that** said nitrifying bacteria, said denitrifying bacteria and said perchlorate reducing bacteria are present in an activated sludge.

5. The method as claimed in claim 4, **characterized in that** said activated sludge is obtained from municipal sewage treatment or from a sedimentary mud.

6. The method as claimed in any one of claims 1, 2, 4 or 5, **characterized in that** said perchlorate reducing bacteria are present in an activated sludge taken from a reactor with denitrification function or from a reactor with the combined functions of denitrification and reduction of perchlorate ions.

7. The method as claimed in any one of claims 1, 2, 4 to 6, **characterized in that** said perchlorate reducing bacteria are present in an activated sludge specialized for the reduction of perchlorates.

8. The method as claimed in claim 7, **characterized in that** said activated sludge specialized for the reduction of perchlorates was obtained by a method that comprises:
- introduction, in an empty reactor, under anaerobic conditions, on the one hand, of an activated sludge, selected from a sludge from municipal sewage treatment, a sedimentary mud, and an activated sludge taken from a reactor with denitrification function or from a reactor with the combined functions of denitrification and reduction of perchlorate ions, and on the other hand, of a carbon-containing organic substrate and nutrients;
- successive additions of perchlorate ions, advantageously in increasing amounts, to said reactor.

9. The method as claimed in any one of claims 1 to 8, **characterized in that** reduction of perchlorates is carried out in the presence of a carbon-containing organic substrate selected from acetic acid, soaps, such as potassium carboxylate and sodium carboxylate, vegetable fatty acids and mixtures thereof.

10. The method as claimed in any one of claims 1 to 9, **characterized in that** the liquid effluents, at the end of at least one of said steps, are filtered to obtain on the one hand an effluent purified of suspended matter and on the other hand a retentate rich in bacteria, at least partly recycled.

11. The method as claimed in any one of claims 1 to 10, **characterized in that** said aqueous solution contains up to 100 g/l of ammonium perchlorate.

12. The method as claimed in any one of claims 1 to 11, **characterized in that** said aqueous solution contains nitrates of less than 100 g/l.

13. The method as claimed in any one of claims 1 to 12, **characterized in that** it is carried out in three reactors, a nitrification reactor, a denitrification reactor and a reactor for the reduction of perchlorates, arranged in series.

## Patentansprüche

1. Verfahren zur biologischen Reinigung einer wäßrigen Lösung, die Ammoniumperchlorat und eventuell auch Nitrationen enthält, **dadurch gekennzeichnet, daß** es umfaßt:
- eine Folge von Nitrifikation/Denitrifikation, wobei die Schritte der Nitrifikation und der Denitrifikation unter aerober Bedingung mit nitrifizierenden Bakterien in Anwesenheit eines mineralischen kohlenstoffhaltigen Substrats und Nährstoffen bzw. unter anaerober Bedingung mit denitrifizierenden Bakterien in Anwesenheit eines organischen kohlenstoffhaltigen Substrats und Nährstoffen durchgeführt werden, sowie
- einen Schritt zur Reduktion der Perchlorate, der getrennt von der wenigstens einen Folge von Nitrifikation/Denitrifikation, unter anaerober Bedingung, mit Perchlorationen-reduzierenden Bakterien, in Anwesenheit eines organischen kohlenstoffhaltigen Substrats und Nährstoffen durchgeführt wird,
wobei der Schritt zur Reduktion der Perchlorate getrennt und nach der Folge von Nitrifikation/Denitrifikation durchgeführt wird, wenn die wäßrige Lösung Nitrationen enthält.

2. Verfahren nach Anspruch 1, **dadurch gekennzeichnet, daß** die Perchlorationen-reduzierenden Bakterien zu den Spezies *Exiguobacterium mexicanum* und/oder *Bacillus cereus* und/oder *Staphylococcus warneri* und/oder *Staphylococcus pasteuri* gehören.

3. Verfahren nach Anspruch 1 oder 2, **dadurch gekennzeichnet, daß** die nitrifizierenden Bakterien, die denitrifizierenden Bakterien und die Perchlorat-reduzierenden Bakterien aus Kulturstämmen stammen.

4. Verfahren nach Anspruch 1 oder 2, **dadurch gekennzeichnet, daß** die nitrifizierenden Bakterien, die denitrifizierenden Bakterien und die Perchlorat-reduzierenden Bakterien in einem Belebtschlamm vorhanden sind.

5. Verfahren nach Anspruch 4, **dadurch gekennzeichnet, daß** der Belebtschlamm aus der Klärung von kommunalem Abwasser oder einem Sedimentschlamm stammt.

6. Verfahren nach einem der Ansprüche 1, 2, 4 oder 5, **dadurch gekennzeichnet, daß** die Perchlorat-reduzierenden Bakterien in einem Belebtschlamm vorhanden sind, der aus einem Reaktor mit Denitrifikationsfunktion oder aus einem Reaktor mit verknüpften Denitrifikations- und Perchlorationenreduktionsfunktionen entnommen wird.

7. Verfahren nach einem der Ansprüche 1, 2, 4 bis 6, **dadurch gekennzeichnet, daß** die Perchlorat-reduzierenden Bakterien in einem auf die Reduktion von Perchloraten spezialisierten Belebtschlamm vorhanden sind.

8. Verfahren nach Anspruch 7, **dadurch gekennzeichnet, daß** der auf die Reduktion von Perchloraten spezialisierte Belebtschlamm durch ein Verfahren erhalten wurde, das umfaßt:
- das Einleiten einerseits eines Belebtschlamms, ausgewählt aus einem Schlamm aus der Klärung von kommunalem Abwasser, einem Sedimentschlamm und einem aus einem Reaktor mit Denitrifikationsfunktion oder aus einem Reaktor mit verknüpften Denitrifikations- und Perchlorationenreduktionsfunktionen entnommenen Belebtschlamm, sowie andererseits eines organischen kohlenstoffhaltigen Substrats und von Nährstoffen in einen leeren Reaktor, unter anaerober Bedingung,
- aufeinanderfolgende Zugaben von Perchlorationen, vorteilhafterweise in zunehmenden Mengen, in den Reaktor.

9. Verfahren nach einem der Ansprüche 1 bis 8, **dadurch gekennzeichnet, daß** die Reduktion der Perchlorate in Anwesenheit eines organischen kohlenstoffhaltigen Substrats, ausgewählt aus Essigsäure, Seifen, wie Kalium- und Natriumcarboxylat, pflanzlichen Fettsäuren und ihren Mischungen, durchgeführt wird.

10. Verfahren nach einem der Ansprüche 1 bis 9, **dadurch gekennzeichnet, daß** die Flüssigabfälle am Ende von wenigstens einem der Schritte gefiltert werden, um einerseits ein von Schwebstoffen gereinigtes Abwasser und andererseits ein bakterienreiches, wenigstens teilweise zurückgeführtes Retentat zu erhalten.

11. Verfahren nach einem der Ansprüche 1 bis 10, **dadurch gekennzeichnet, daß** die wäßrige Lösung bis zu 100 g/l Ammoniumperchlorat enthält.

12. Verfahren nach einem der Ansprüche 1 bis 11, **dadurch gekennzeichnet, daß** die wäßrige Lösung weniger als 100 g/l Nitrate enthält.

13. Verfahren nach einem der Ansprüche 1 bis 12, **dadurch gekennzeichnet, daß** es in drei Reaktoren, einem Nitrifikationsreaktor, einem Denitrifikationsreaktor und einem Perchloratreduktionsreaktor, welche in Reihe geschaltet sind, durchgeführt wird.
